# FASCICULE DE BREVET EUROPEEN

(11) **EP 4 439 484 B1**
(45) Date de publication et mention de la délivrance du brevet: **02.09.2026**
(21) Numéro de dépôt: 24164771.8
(22) Date de dépôt: 20.03.2024
(51) Int. Cl.: G06V 10/82, G06V 20/10, G06T 7/00, G06T 7/11

(54) **PROCÉDÉ DE CLASSIFICATION DE DONNÉES MULTIDIMENSIONNELLES FORTEMENT RÉSOLUES**
VERFAHREN ZUR KLASSIFIZIERUNG VON HOCHAUFGELÖSTEN MEHRDIMENSIONALEN DATEN
METHOD FOR CLASSIFYING MULTIDIMENSIONAL HIGHLY RESOLVED DATA

(30) Priorité: 27.03.2023 FR 2302884
(43) Date de publication de la demande: 02.10.2024
(73) Titulaire: Commissariat à l'Energie Atomique et aux Energies Alternatives, 75015 Paris (FR)
(72) Inventeur: MAYRAN DE CHAMISSO, Fabrice, 91191 Gif-sur-Yvette Cedex (FR); MEDEN, Boris, 91191 Gif-sur-Yvette Cedex (FR); MICHEL, Rémi, 91191 Gif-sur-Yvette Cedex (FR)
(74) Mandataire: Atout PI Laplace

(56) Documents cités:
- TANMAY CHAKRABORTY ET AL: "SpectralNET: Exploring Spatial-Spectral WaveletCNN for Hyperspectral Image Classification", ARXIV.ORG, CORNELL UNIVERSITY LIBRARY, 201 OLIN LIBRARY CORNELL UNIVERSITY ITHACA, NY 14853, 1 April 2021 (2021-04-01), XP081931015
- TAO XIAN ET AL: "Learning Multi-Resolution Features for Unsupervised Anomaly Localization on Industrial Textured Surfaces", IEEE TRANSACTIONS ON ARTIFICIAL INTELLIGENCE, 6 December 2022 (2022-12-06), pages 1 - 13, XP093066161, DOI: 10.1109/TAI.2022.3227142
- WANG TINGHUAI ET AL: "Spectral Pyramid Graph Attention Network for Hyperspectral Image Classification", ARXIV, 20 January 2020 (2020-01-20), XP093171147, Retrieved from the Internet <URL:https://arxiv.org/pdf/2001.07108> [retrieved on 20240606]
- ANAND R ET AL: "Robust Classification Technique for Hyperspectral Images Based on 3D-Discrete Wavelet Transform", REMOTE SENSING, vol. 13, no. 7, 1 April 2021 (2021-04-01), CH, pages 1255, XP093171168, ISSN: 2072-4292, DOI: 10.3390/rs13071255
- TU BING ET AL: "Multi-resolution Pyramid Enhanced Non-local Feature Extraction for Hyperspectral Classification", IEEE JOURNAL OF SELECTED TOPICS IN APPLIED EARTH OBSERVATIONS AND REMOTE SENSING, vol. 15, 7 July 2022 (2022-07-07), USA, pages 5865 - 5879, XP093171326, ISSN: 1939-1404, DOI: 10.1109/JSTARS.2022.3189105

## Description

L'invention concerne le domaine de la classification ou segmentation automatique de données multidimensionnelles de grande taille. Le domaine de l'invention est aussi celui des méthodes d'intelligence artificielles basées sur un ou plusieurs moteurs d'apprentissage automatique, par exemple des réseaux de neurones artificiels, pour réaliser une classification ou segmentation automatique de données multidimensionnelles de grande taille.

Les données multidimensionnelles sont par exemple des images multispectrales ou hyperspectrales ayant une résolution spatiale importante et un grand nombre de canaux de longueurs d'ondes. Elles peuvent concerner également des images en trois dimensions ou des modélisations en trois dimensions sous forme de voxels. Plus généralement, les données multidimensionnelles peuvent comprendre plus de trois dimensions, par exemple il peut s'agir de séquences vidéos comprenant deux ou trois dimensions spatiales et une dimension temporelle.

Lorsqu'on traite des données multidimensionnelles qui présentent au moins trois dimensions voire davantage, et que chacune des dimensions est fortement résolue, la taille des données à traiter et à mémoriser devient rapidement très importante. Pour réaliser une classification ou segmentation automatique de telles données, se pose un problème de capacité de calcul et de stockage en mémoire, plus généralement de limitations matérielles des calculateurs utilisés pour implémenter ce type d'algorithme.

Il existe donc un problème à résoudre pour trouver des solutions permettant de traiter des données multidimensionnelles fortement résolues avec des calculateurs ayant des capacités et ressources limitées pour réaliser de la classification et ou segmentation.

Une approche connue visant à appliquer des méthodes de classification automatiques à des données multidimensionnelles de grandes dimensions consiste à appliquer un prétraitement aux données par le biais d'une analyse en composantes principales pour réduire la taille des données sur au moins une dimension. Des méthodes d'apprentissage machine tels que réseaux de neurones, forêts aléatoires ou machines à vecteur de support sont ensuite appliquées aux données compressées.

Par exemple, dans le cas d'images hyperspectrales comportant un grand nombre de canaux de longueurs d'ondes (typiquement plusieurs centaines), une analyse en composante principale peut être appliquée pour réduire le nombre de canaux à environ 3 à 5 canaux. Une méthode de ce type est par exemple connue de Tanmay CHAKRABORTY ET AL: "SpectralNET: Exploring Spatial-Spectral WaveletCNN for Hyperspectral Image Classification", publié dans arXiv:2014.00341v1, CORNELL UNIVERSITY LIBRARY, 201, ITHACA, NY 14853.

De même, un traitement équivalent peut être appliqué pour réduire une dimension temporelle, pour une séquence vidéo par exemple en sélectionnant certaines images clés dans la séquence temporelle afin de diminuer la résolution temporelle.

Une telle approche fonctionne correctement pour des problèmes visant à classifier des objets appartenant à un faible nombre de classes, typiquement deux ou trois classes connues. Cependant, lorsqu'il s'agit de séparer des objets d'un élément connu d'objets inconnus, il n'est pas possible d'assurer que, parmi les objets inconnus, certains n'auront pas la même réponse spectrale que l'objet connu dans les quelques canaux retenus. A l'inverse, la probabilité qu'un objet inconnu ait la même réponse spectrale qu'un objet connu sur un grand nombre de canaux est beaucoup plus faible. Il y a donc un intérêt à retenir l'ensemble des canaux des données hyperspectrales pour réaliser la classification.

Par ailleurs, il existe également un intérêt à réaliser la classification à partir d'une image fortement résolue spatialement, voire couplée à une carte de profondeur ce qui permet d'identifier des caractéristiques géométriques précises pour réaliser une segmentation performante.

De même, il existe un intérêt à conserver une résolution temporelle élevée pour des séquences vidéo car la sélection d'images clés pour réduire la résolution temporelle est un problème difficile à résoudre.

L'invention propose une nouvelle méthode de classification qui permet de traiter des données multidimensionnelles brutes en intégrant plusieurs sous-échantillonnages de ces données, dont les paramètres peuvent être appris automatiquement ou non. L'invention permet ainsi de limiter la complexité calculatoire des traitements tout en conservant a priori plusieurs options de sous échantillonnages qui permettent de s'adapter au mieux à chaque type d'objet à classifier ou segmenter dans les données initiales.

Contrairement aux approches traditionnelles basées sur une réduction, a priori, des dimensions des données par le biais d'analyse en composantes principales, l'invention permet d'améliorer les performances de classification pour des objets multiples en n'éliminant pas, a priori, une partie importante de la résolution des données initiales tout en limitant la complexité calculatoire de par l'utilisation de données sous-échantillonnées.

L'invention a pour objet un procédé, mis en œuvre par ordinateur, de classification de données au moyen d'un modèle d'apprentissage automatique, comprenant les étapes de :
- Recevoir un ensemble de données multidimensionnelles mesurées au moyen de capteurs,
- Déterminer plusieurs représentations sous-échantillonnées différentes des données reçues, chaque représentation ayant une résolution inférieure aux données reçues sur au moins une dimension,
- Appliquer un premier moteur d'apprentissage machine auxdites représentations sous-échantillonnées de manière à les convertir dans un espace de caractéristiques de taille réduite,
- Appliquer au moins un autre moteur d'apprentissage machine auxdites caractéristiques parmi un moteur de segmentation ou un moteur de détection sémantique, de manière à segmenter les données multidimensionnelles en plusieurs classes d'objets et/ou à détecter la présence d'un objet donné dans les données multidimensionnelles.

Selon un aspect particulier de l'invention, les données multidimensionnelles sont de l'un des types suivants pris seul ou en combinaison avec un autre type : des images multispectrales ou hyperspectrales, des images en trois dimensions, des séquences vidéo en deux ou trois dimensions spatiales, des mesures de température, de pression, d'hygrométrie.

Dans un mode de réalisation particulier, le procédé selon l'invention comprend en outre un moteur d'apprentissage machine configuré pour apprendre les fonctions de sous-échantillonnage permettant de transformer l'ensemble de données reçues en plusieurs représentations sous-échantillonnées.

Dans un mode de réalisation particulier, le procédé selon l'invention comprend en outre une étape de classification basée sur une modélisation probabiliste pour générer une probabilité d'appartenance à une classe.

Dans une variante de réalisation de l'invention, le modèle d'apprentissage automatique est entrainé de façon supervisée et le procédé comprend en outre la sélection, parmi toutes les représentations sous-échantillonnées des données multidimensionnelles, d'un sous ensemble des représentations qui contribuent le plus à la tâche de classification.

Dans une variante de réalisation de l'invention, l'un au moins des moteurs d'apprentissage machine est un réseau de neurones convolutionnels.

Dans une variante de réalisation de l'invention, le modèle d'apprentissage automatique est entrainé à l'aide de masques de segmentation associées à des données multidimensionnelles d'entrainement, les masques de segmentation étant aptes à segmenter les données en différentes classes.

Dans une variante de réalisation de l'invention, le moteur de segmentation est un réseau de neurones convolutionnels (202) configuré pour recevoir en entrée les caractéristiques produites en sortie du premier moteur d'apprentissage machine et pour délivrer en sortie un masque de segmentation multidimensionnel de dimensions identiques aux données reçues, apte à classifier différents objets contenus dans les données reçues.

Dans une variante de réalisation de l'invention, le moteur de détection est un réseau de neurones convolutionnels configuré pour recevoir en entrée les caractéristiques produites en sortie du premier moteur d'apprentissage machine et pour délivrer en sortie une information sémantique de présence, dans les données reçues, d'un objet appartenant à une classe donnée.

Dans une variante de réalisation de l'invention, les données multidimensionnelles comportent au moins trois dimensions différentes.

L'invention a aussi pour objet un programme d'ordinateur comprenant des instructions de code pour la mise en œuvre du procédé selon l'invention lorsque ledit programme est exécuté sur un ordinateur et un support d'enregistrement lisible par ordinateur sur lequel est enregistré le programme d'ordinateur selon l'invention.

D'autres caractéristiques et avantages de la présente invention apparaîtront mieux à la lecture de la description qui suit en relation aux dessins annexés suivants.
[Fig. 1] représente un organigramme détaillant les étapes de mise en œuvre d'une méthode de classification selon un mode de réalisation de l'invention,
[Fig. 2] représente un schéma d'un exemple de réseau de neurones artificiel configuré pour mettre en œuvre l'invention,
[Fig. 3] représente un premier exemple de classification d'objets obtenue en exécutant l'invention,
[Fig. 4] représente un second exemple de classification d'objets obtenue en exécutant l'invention.

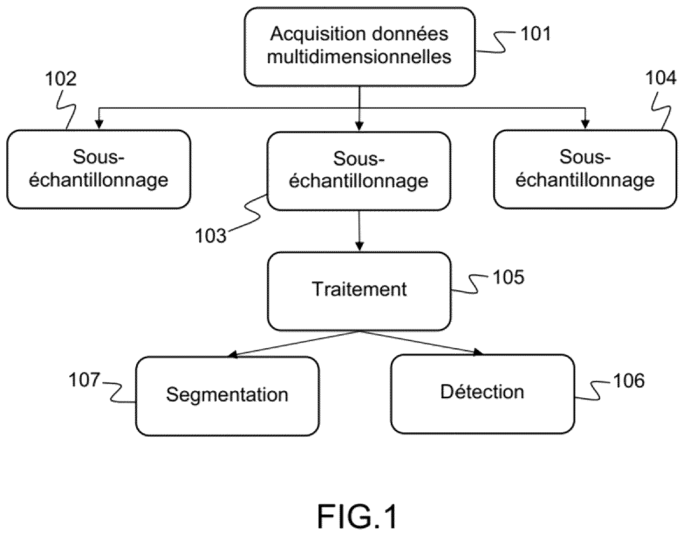

La figure 1 illustre, sur un organigramme, les étapes de mise en œuvre d'une méthode de classification d'objets selon un mode de réalisation de l'invention.

La première étape consiste en l'acquisition 101 de données multidimensionnelles. Ces données ont préférentiellement au moins trois dimensions. Il peut s'agir d'images hyperspectrales ou multispectrales ayant deux dimensions spatiales et une dimension correspondant à un nombre de longueurs d'ondes spectrales. Il peut s'agir également de données en trois dimensions, par exemples des images en 2D accompagnées d'une information de profondeur. Les données multidimensionnelles peuvent aussi être des voxels caractérisant une scène en trois dimensions.

Les données d'imagerie peuvent être complétées par une ou plusieurs dimensions supplémentaires correspondant à des mesures issues de capteurs telles que des mesures de température, de pression, d'hygrométrie.

Les données considérées peuvent également être des séquences vidéo, dans ce cas une dimension temporelle est ajoutée aux données d'images.

Il peut s'agir encore de données d'imagerie médicale pour lesquelles une dimension supplémentaire correspond à une dimension spatiale selon laquelle plusieurs acquisitions par imagerie IRM sont réalisées afin de produire plusieurs images en coupe d'un volume.

De manière générale, toutes données obtenues à partir de capteurs et comprenant plusieurs dimensions (préférentiellement au moins trois) peuvent être utilisées en entrée de la méthode selon l'invention dans la mesure où il existe un problème de détection, de segmentation et/ou de classification d'objets au sein de ces données.

Un objectif général de la méthode est de détecter et/ou catégoriser des objets à partir des informations capturées par les données mesurées. Par exemple si les données sont des données d'imagerie, les objets à catégoriser sont des objets identifiés dans la scène capturée.

Un autre objectif est de limiter la taille des données à traiter par l'algorithme de classification tout en conservant le maximum d'informations présentes dans le contenu des données de sorte à permettre une classification de tout type d'objets et non seulement d'objets spécifiques prédéfinis.

Les données multidimensionnelles ont des dimensions supérieures à plusieurs centaines d'éléments. Par exemple, il peut s'agir d'images spectrales de taille 512 par 512 pixels avec 200 canaux par pixels ou des voxels 3D de dimensions 1000 par 1000 par 1000 ou encore des séquences vidéo de taille 1920x1090x100 images.

Pour cela, on applique aux données multidimensionnelles acquises 101, plusieurs étapes de sous-échantillonnage 102,103,104. Bien que trois étapes sont représentées sur la figure 1, l'invention n'est pas limitée à ce nombre et peut comprendre un nombre d'étapes de sous-échantillonnages plus élevé.

Chaque étape de sous-échantillonnage 102,103,104 est destiné à sous-échantillonner au moins une dimension des données avec un facteur de sous échantillonnage prédéfini.

Un avantage à l'utilisation de plusieurs sous-échantillonneurs appliqués respectivement à toutes les dimensions de façon indépendante est que cela permet de conserver une résolution plus élevée pour une partie des dimensions en sortie de chaque étape de sous-échantillonnage. De cette façon, le contenu sémantique des données peut être exploité à pleine résolution au moins en sortie d'une étape de sous-échantillonnage mais la taille globale des données sous-échantillonnées est diminuée par rapport aux données d'origine.

En considérant en entrée des images hyperspectrales de dimensions N, P, Q, c'est-à-dire des images de taille N par P ayant Q canaux de longueurs d'ondes, des exemples de sous-échantillonnage possibles sont {N/8,P/8,Q}, {N/4,P/4,Q/2}, {N/2,P/2,Q/4}, {N,P,Q/8}.

Par exemple, pour une image spectrale de dimensions 512x512x200, un exemple de sous-échantillonnages possibles consistent à générer des images de dimensions 512x512x25, 256x256x50, 128x128x100, 64x64x200.

Ainsi, avantageusement, chaque dimension peut être affectée d'un facteur de sous-échantillonnage égal à une puissance de 2.

Dans cet exemple, le volume de données en entrée est réduit de 512x512x200 à 512x512x200x(1/8 +1/16+1/32+1/64). Dans cet exemple, le volume de données à traiter est réduit mais la méthode de classification automatique par apprentissage a accès à la pleine résolution spatiale et à la pleine résolution spectrale selon les sorties des sous-échantillonneurs.

Le nombre d'opérations de sous-échantillonnages et les facteurs de sous-échantillonnages associés sont des paramètres prédéfinis de l'invention.

Dans un mode de réalisation de l'invention, les fonctions de sous-échantillonnage sont prédéfinies, elles correspondent par exemple à des fonctions usuelles géométriques telles que des moyennes ou des fonctions médianes sur fenêtre glissante.

Dans un autre mode de réalisation de l'invention, les fonctions de sous-échantillonnage sont réalisées par un réseau de neurones convolutionnel et sont apprises via un entrainement de ce réseau.

En sortie des étapes 102,103,104, on obtient plusieurs versions sous-échantillonnées des données acquises.

Ensuite, une étape de traitement 105 est appliquée afin de convertir les données sous-échantillonnées dans un espace de représentations pertinentes. Pour cela, l'étape 105 peut être réalisée au moyen d'un réseau de neurones convolutionnel entrainé pour extraire des caractéristiques pertinentes ou « features » en anglais, dans un espace de dimension réduite selon une représentation intermédiaire.

La représentation intermédiaire fournie en sortie de l'étape 105 est ensuite exploitée via une étape de détection sémantique 106 ou de segmentation 107, chacune de ces deux étapes pouvant être exécutée seule ou en supplément de l'autre.

L'étape de segmentation 107 peut être réalisée au moyen d'un réseau de neurones convolutionnel qui prend en entrée les caractéristiques des données dans la représentation intermédiaire et fournit en sortie des données multidimensionnelles de dimensions identiques aux données acquises 101 et qui représentent un masque de segmentation des données dans lequel certains objets appartenant à des classes sont identifiés.

L'étape de détection sémantique 106 peut aussi être réalisée au moyen d'un réseau de neurones convolutionnel qui prend en entrée les caractéristiques des données dans la représentation intermédiaire et fournit en sortie une donnée binaire sous la forme d'un indicateur de segmentation qui indique si un objet d'une catégorie donnée est présent dans les données acquises. Par exemple, cet indicateur est un vecteur dont chaque composante indique, par une valeur binaire, si un objet appartenant à une classe est présent dans les données acquises.

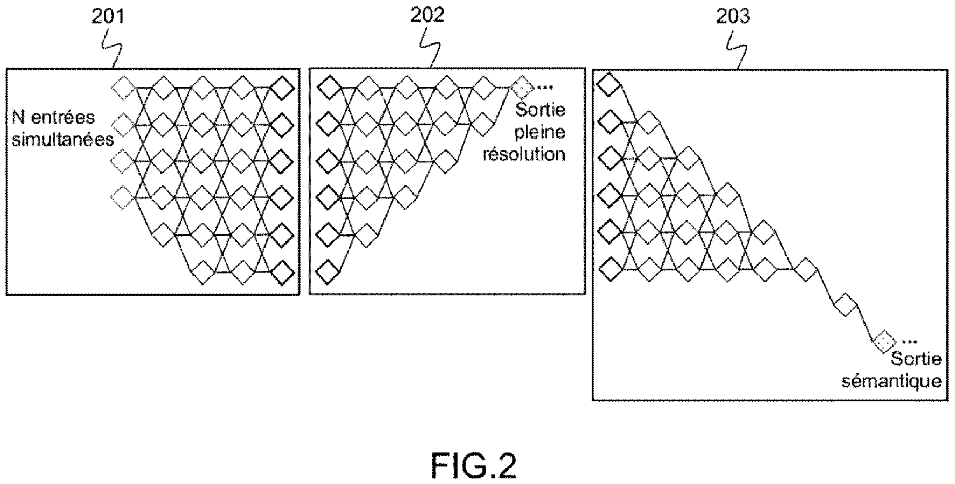

La figure 2 représente schématiquement un exemple d'implémentation de la méthode de la figure 1 sous la forme d'un réseau de neurones artificiel.

Sur cet exemple le réseau de neurones artificiel est composé d'un premier réseau de neurones 201 configuré pour exécuter l'étape 105 de traitement, qui prend en entrée les versions sous-échantillonnées des données initiales et produit en sortie des caractéristiques dans un espace intermédiaire. Sur l'exemple de la figure 2, le réseau de neurones 201 reçoit quatre entrées correspondant à quatre versions sous-échantillonnées des données avec des taux de sous-échantillonnage différents.

Un deuxième réseau de neurones 202 prend en entrée les sorties du premier réseau 201 et fournit une sortie à pleine résolution, c'est-à-dire ayant la même résolution que les données initiales sur toutes les dimensions et correspondant à un masque de classification.

Un troisième réseau de neurones 203 prend en entrée les sorties du premier réseau 201 et fournit une sortie correspondant à un indicateur de présence d'un objet d'une ou plusieurs classes données dans les données d'entrée.

Chacun des réseaux 202,203 peut être utilisé seul ou les deux réseaux peuvent être utilisés conjointement.

Dans une variante de réalisation non représentée à la figure 2, les fonctions de sous-échantillonnage permettant d'obtenir les données sous-échantillonnées selon quatre taux de sous-échantillonnage différents en entrée du réseau 201 peuvent être apprises et exécutées au moyen d'un autre réseau de neurones artificiel qui prend en entrée les données pleinement résolues acquises à l'étape 101 et fournit en sortie les données sous-échantillonnées.

L'apprentissage du réseau de neurones sous-échantillonneur peut être fait de façon indépendante en configurant sa fonction de cout de sorte à minimiser l'information contenue dans les données d'entrée et perdue par sous échantillonnage.

Alternativement, l'ensemble du réseau de neurones décrit à la figure 2, y compris le réseau sous-échantillonneur peut être appris intégralement de façon supervisée pour réaliser la tâche de segmentation ou classification souhaitée.

Dans un mode de réalisation de l'invention, lors de l'entrainement du réseau de neurones de la figure 2, on identifie, pour un type de données correspondant aux données d'apprentissage et un type d'objets à classifier dans ces données, les entrées du réseau 201 qui contribuent le plus aux sorties des réseaux 202 ou 203. Si certaines entrées ne contribuent pas ou très peu aux sorties, dans une variante de réalisation, lors de l'utilisation du réseau de neurones pour réaliser la tâche de classification visée, ces entrées sont supprimées de sorte à réduire la complexité calculatoire.

Ainsi, un avantage à l'invention est qu'elle permet d'identifier quelles données sous-échantillonnées, et en particulier selon quelle dimension, contribuent le mieux pour la classification d'un objet donné. En effet, des informations sémantiques différentes peuvent être contenues dans les différentes dimensions des données.

Par exemple, dans certaines images, on peut observer que l'information sémantique sera toujours présente lorsqu'on sous-échantillonne seulement une dimension spatiale.

Dans un autre exemple, certains objets peuvent être mieux identifiés dans certains canaux spectraux d'images spectrales.

Sans sortir du cadre de l'invention, les réseaux de neurones décrits à la figure 2 peuvent être remplacés par d'autres moteurs d'intelligence artificielle ou d'apprentissage machine tels que des machines à vecteurs de supports ou des algorithmes de forêt aléatoires.

Dans une variante de réalisation, un algorithme de classification particulier peut être mis en œuvre dans la dernière couche des réseaux 202 et 203 pour réaliser une modélisation probabiliste des données et fournir une probabilité d'appartenance à une classe d'objets.

Une méthode de classification par modélisation probabiliste possible est décrite dans la publication scientifique Li, C.-L. et al, « CutPaste : self supervised learning for anomaly detection and localization », 2021 IEEE/CVF Conference on Computer Vision and Pattern recognition.

La représentation fournie à la figure 2 montre une architecture de réseau de neurones qui se présente comme une grille, avec des communications entre neurones du réseau à la même résolution et à des résolutions différentes (inférieures ou supérieures). Cela peut être vu sur la représentation du réseau 201.

Cette architecture peut être modifiée et paramétrée après apprentissage en ajoutant des connexions résiduelles de type court circuits ou en supprimant certaines parties des connexions qui ne contribuent pas à la tâche qu'on souhaite résoudre afin de gagner en mémoire occupée et en temps de calcul.

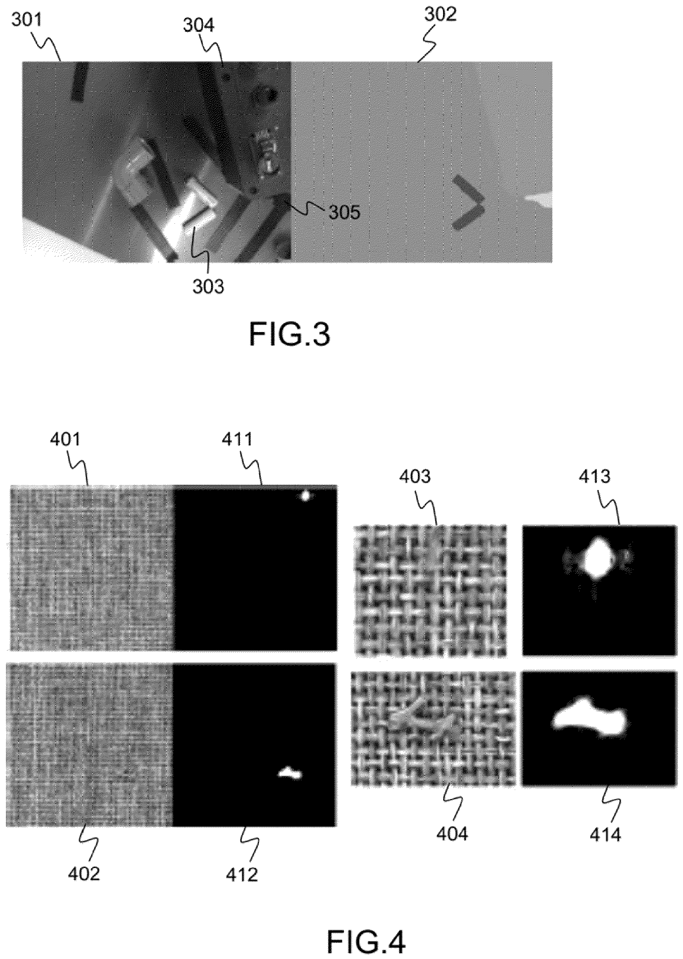

La figure 3 illustre, sur un exemple, un résultat de classification obtenu au moyen de l'invention. Les données considérées pour l'exemple sont des images 2D. On a représenté sur la figure 3 une image 301 d'une table sur laquelle sont disposé plusieurs objets dont des piles 303, une plaque noire 304 et une clé 305.

L'image 302 de droite représente la sortie du réseau de neurones 202 qui fournit un masque de segmentation de même dimensions que l'image d'origine 301 et dans lequel les classes d'objets « pile », « plaque noire » et « clé » sont identifiées et localisées spatialement.

La figure 4 illustre un autre exemple d'application de l'invention qui concerne la détection de défauts dans des tissus. Les deux images 401,402 représentent deux images de tissus différentes. Chacune de ces images contient un défaut qui est identifié sur les masques de segmentation 411,412 correspondants.

Les images 403,413,404,414 correspondent à des zoom sur la zone d'intérêt respectivement des images d'origines 401,411,402,412.

Contrairement aux méthodes de l'état de l'art, l'invention permet, grâce à l'utilisation de différentes versions sous-échantillonnées des données multidimensionnelles d'origines de conserver l'information sémantique des données tout en limitant la complexité calculatoire.

De façon générale, l'invention peut être mise en œuvre à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple.

Les données produites en entrée de la méthode selon l'invention peuvent être acquises par un capteur d'images, une caméra, un appareil photographique, un imageur satellite ou tout autre dispositif de capture d'images ou plus généralement tout capteur permettant de mesurer des données physiques.

## Revendications

1. Procédé, mis en œuvre par ordinateur, de classification de données au moyen d'un modèle d'apprentissage automatique, comprenant les étapes de :
- Recevoir (101) un ensemble de données multidimensionnelles mesurées au moyen de capteurs et comprenant au moins une dimension non spatiale
- Déterminer (102,103,104) plusieurs représentations sous-échantillonnées différentes des données reçues, chaque représentation ayant une résolution inférieure aux données reçues sur au moins une dimension, chaque représentation étant obtenue en appliquant un taux de sous-échantillonnage différent des autres représentations pour au moins une dimension non spatiale,
- Appliquer (105) un premier moteur d'apprentissage machine auxdites représentations sous-échantillonnées de manière à les convertir dans un espace de caractéristiques de taille réduite,
- Appliquer au moins un autre moteur d'apprentissage machine auxdites caractéristiques parmi un moteur de segmentation (107) ou un moteur de détection sémantique (106), de manière à segmenter les données multidimensionnelles en plusieurs classes d'objets et/ou à détecter la présence d'un objet donné dans les données multidimensionnelles.

2. Procédé de classification de données selon la revendication 1 dans lequel les données multidimensionnelles sont de l'un des types suivants pris seul ou en combinaison avec un autre type : des images multispectrales ou hyperspectrales, des images en trois dimensions, des séquences vidéo en deux ou trois dimensions spatiales, des mesures de température, de pression, d'hygrométrie.

3. Procédé de classification de données selon l'une quelconque des revendications précédentes comprenant en outre un moteur d'apprentissage machine configuré pour apprendre les fonctions de sous-échantillonnage permettant de transformer l'ensemble de données reçues en plusieurs représentations sous-échantillonnées.

4. Procédé de classification de données selon l'une quelconque des revendications précédentes comprenant en outre une étape de classification basée sur une modélisation probabiliste pour générer une probabilité d'appartenance à une classe.

5. Procédé de classification de données selon l'une quelconque des revendications précédentes dans lequel le modèle d'apprentissage automatique est entrainé de façon supervisée et le procédé comprend en outre la sélection, parmi toutes les représentations sous-échantillonnées des données multidimensionnelles, d'un sous ensemble des représentations qui contribuent le plus à la tâche de classification.

6. Procédé de classification de données selon l'une quelconque des revendications précédentes dans lequel l'un au moins des moteurs d'apprentissage machine est un réseau de neurones convolutionnels (201,202,203).

7. Procédé de classification de données selon l'une quelconque des revendications précédentes dans lequel le modèle d'apprentissage automatique est entrainé à l'aide de masques de segmentation associées à des données multidimensionnelles d'entrainement, les masques de segmentation étant aptes à segmenter les données en différentes classes.

8. Procédé de classification de données selon l'une quelconque des revendications précédentes dans lequel le moteur de segmentation est un réseau de neurones convolutionnels (202) configuré pour recevoir en entrée les caractéristiques produites en sortie du premier moteur d'apprentissage machine et pour délivrer en sortie un masque de segmentation multidimensionnel de dimensions identiques aux données reçues, apte à classifier différents objets contenus dans les données reçues.

9. Procédé de classification de données selon l'une quelconque des revendications précédentes dans lequel le moteur de détection est un réseau de neurones convolutionnels (203) configuré pour recevoir en entrée les caractéristiques produites en sortie du premier moteur d'apprentissage machine et pour délivrer en sortie une information sémantique de présence, dans les données reçues, d'un objet appartenant à une classe donnée.

10. Procédé de classification de données selon l'une quelconque des revendications précédentes dans lequel les données multidimensionnelles comportent au moins trois dimensions différentes.

11. Programme d'ordinateur comprenant des instructions de code pour la mise en œuvre du procédé selon l'une quelconque des revendications précédentes lorsque ledit programme est exécuté sur un ordinateur.

12. Support d'enregistrement lisible par ordinateur sur lequel est enregistré le programme d'ordinateur selon la revendication 11.

## Patentansprüche

1. Computerimplementiertes Verfahren zur Klassifizierung von Daten mittels eines Modells des maschinellen Lernens, das die folgenden Schritte umfasst:
- Empfangen (101) eines mehrdimensionalen Datensatzes, der mittels Sensoren gemessen wird und mindestens eine nicht-räumliche Dimension umfasst
- Bestimmen (102, 103, 104) mehrerer unterschiedlicher unterabgetasteter Darstellungen der empfangenen Daten, wobei jede Darstellung in mindestens einer Dimension eine geringere Auflösung aufweist als die empfangenen Daten, wobei jede Darstellung durch Anwenden einer von den anderen Darstellungen abweichenden Unterabtastrate für mindestens eine nicht-räumliche Dimension erhalten wird,
- Anwenden (105) einer ersten Engine für maschinelles Lernen auf die unterabgetasteten Darstellungen, um diese in einen Merkmalsraum mit reduzierter Größe umzuwandeln,
- Anwenden mindestens einer weiteren Engine für maschinelles Lernen auf die Merkmale aus einer Segmentierungs-Engine (107) oder einer Engine für semantische Erkennung (106), um die mehrdimensionalen Daten in mehrere Objektklassen zu segmentieren und/oder das Vorhandensein eines gegebenen Objekts in den mehrdimensionalen Daten zu erkennen.

2. Verfahren zur Klassifizierung von Daten nach Anspruch 1, wobei die mehrdimensionalen Daten aus einem der folgenden Typen bestehen, entweder allein oder in Kombination mit einem anderen Typ: multispektrale oder hyperspektrale Bilder, dreidimensionale Bilder, Videosequenzen in zwei oder drei räumlichen Dimensionen, Messungen von Temperatur, Druck und Luftfeuchtigkeit.

3. Verfahren zur Klassifizierung von Daten nach einem der vorstehenden Ansprüche, weiter umfassend eine Engine für maschinelles Lernen, die zum Erlernen von Unterabtastungsfunktionen konfiguriert ist, die es ermöglichen, den empfangenen Datensatz in mehrere unterabgetastete Darstellungen umzuwandeln.

4. Verfahren zur Klassifizierung von Daten nach einem der vorstehenden Ansprüche, weiter umfassend einen Klassifizierungsschritt auf der Grundlage einer probabilistischen Modellierung zur Erzeugung einer Wahrscheinlichkeit der Zugehörigkeit zu einer Klasse.

5. Verfahren zur Klassifizierung von Daten nach einem der vorstehenden Ansprüche, wobei das Modell des maschinellen Lernens unter Aufsicht trainiert wird und das Verfahren weiter die Auswahl einer Teilanordnung jener Darstellungen aus allen unterabgetasteten Darstellungen der mehrdimensionalen Daten umfasst, die am stärksten zur Klassifizierungsaufgabe beitragen.

6. Verfahren zur Klassifizierung von Daten nach einem der vorstehenden Ansprüche, wobei mindestens eine der Engine für maschinelles Lernen ein neuronale Faltungsnetzwerk (201, 202, 203) ist.

7. Verfahren zur Klassifizierung von Daten nach einem der vorstehenden Ansprüche, wobei das Modell des maschinellen Lernens mithilfe von Segmentierungsmasken trainiert wird, die mehrdimensionalen Trainingsdaten zugeordnet sind, wobei die Segmentierungsmasken dazu geeignet sind, die Daten in verschiedene Klassen zu segmentieren.

8. Verfahren zur Klassifizierung von Daten nach einem der vorstehenden Ansprüche, wobei die Segmentierungs-Engine ein neuronales Faltungsnetzwerk (202) ist, das konfiguriert ist, um als Eingabe die von der ersten Engine für maschinelles Lernen ausgegebenen Merkmale zu empfangen und als Ausgabe eine mehrdimensionale Segmentierungsmaske mit denselben Dimensionen wie die empfangenen Daten herauszugeben, die geeignet ist, verschiedene in den empfangenen Daten enthaltene Objekte zu klassifizieren.

9. Verfahren zur Klassifizierung von Daten nach einem der vorstehenden Ansprüche, wobei die Erkennungs-Engine ein neuronales Faltungsnetzwerk (203) ist, das konfiguriert ist, um als Eingabe die von der ersten Engine für maschinelles Lernen ausgegebenen Merkmale zu empfangen und als Herausgabe eine semantische Information über das Vorhandensein eines zu einer bestimmten Klasse gehörenden Objekts in den empfangenen Daten zu liefern.

10. Verfahren zur Klassifizierung von Daten nach einem der vorstehenden Ansprüche, wobei die mehrdimensionalen Daten mindestens drei verschiedene Dimensionen umfassen.

11. Computerprogramm, umfassend Codeanweisungen zur Umsetzung des Verfahrens nach einem der vorstehenden Ansprüche, wenn das Programm auf einem Computer ausgeführt wird.

12. Computerlesbares Speichermedium, auf dem das Computerprogramm nach Anspruch 11 gespeichert ist.

## Claims

1. Computer-implemented method for classifying data using a machine learning model, comprising the steps of:
- Receiving (101) a set of multidimensional data measured by sensors and comprising at least one non-spatial dimension
- Determining (102, 103, 104) several different subsampled representations of the received data, each representation having a lower resolution than the received data in at least one dimension, each representation being obtained by applying a subsampling rate different from that of the other representations for at least one non-spatial dimension,
- Applying (105) a first machine learning engine to said subsampled representations in order to convert them into a reduced-size feature space,
- Applying at least one other machine learning engine to the features amongst a segmentation engine (107) or a semantic detection engine (106), so as to segment the multidimensional data into several object classes and/or detect the presence of a given object in the multidimensional data.

2. Data classification method according to claim 1, wherein the multidimensional data are of one of the following types, alone or in combination with another type: multispectral or hyperspectral images, three-dimensional images, video sequences having two or three spatial dimensions, temperature, pressure or hygrometry measurements.

3. Data classification method according to any one of the preceding claims, further comprising a machine learning engine configured to learn the subsampling functions for transforming the set of received data into several subsampled representations.

4. Data classification method according to any one of the preceding claims, further comprising a classification step based on a probabilistic modeling to generate a probability of membership in a class.

5. Data classification method according to any one of the preceding claims, wherein the machine learning model is trained in a supervised manner, and the method further comprises selecting, from among all of the subsampled representations of the multidimensional data, a subset of the representations that contribute the most to the classification task.

6. Data classification method according to any one of the preceding claims, wherein at least one of the machine learning engines is a convolutional neural network (201, 202, 203).

7. Data classification method according to any one of the preceding claims, wherein the machine learning model is trained using segmentation masks associated with multidimensional training data, the segmentation masks being capable to segment the data into different classes.

8. Data classification method according to any one of the preceding claims, wherein the segmentation engine is a convolutional neural network (202) configured to receive, as input, the features produced at the output of the first machine learning engine and to provide, as output, a multidimensional segmentation mask having dimensions identical to those of the received data and being capable to classify different objects contained in the received data.

9. Data classification method according to any one of the preceding claims, wherein the detection engine is a convolutional neural network (203) configured to receive, as input, the features produced at the output of the first machine learning engine and to provide, as output, semantic information indicating the presence, in the received data, of an object belonging to a given class.

10. Data classification method according to any one of the preceding claims, wherein the multidimensional data comprise at least three different dimensions.

11. Computer program comprising code instructions for implementing the method according to any one of the preceding claims when said computer program is executed on a computer.

12. Computer-readable recording medium on which the computer program according to claim 11 is recorded.
